# EUROPÄISCHE PATENTSCHRIFT

(11) **EP 1 922 139 B1**
(45) Veröffentlichungstag und Bekanntmachung des Hinweises auf die Patenterteilung: **16.12.2009**
(21) Anmeldenummer: 06778263.1
(22) Anmeldetag: 17.08.2006
(51) Int. Cl.: B01F 15/00

(54) **KÜCHENGERÄT MIT EINER MITTELS EINER MEMBRAN ABGEDICHTETEN WERKZEUGKUPPLUNG**
KITCHEN APPLIANCE COMPRISING A TOOL COUPLING SEALED BY MEANS OF A MEMBRANE
USTENSILE DE CUISINE A SYSTEME D'ACCOUPLEMENT D'INSTRUMENT ETANCHEIFIE AU MOYEN D'UNE MEMBRANE

(30) Priorität: 26.08.2005 DE 102005040511
(43) Veröffentlichungstag der Anmeldung: 21.05.2008
(73) Patentinhaber: BSH Bosch und Siemens Hausgeräte GmbH, 81739 München (DE)
(72) Erfinder: PESEC, Jurij, 3301 Petrovce (SI); POGACAR, Toni, 3311 Sempeter (SI); RUDEZ, Darko, 3230 Sentjur (SI)
(86) Internationale Anmeldenummer: PCT/EP2006/065408
(87) Internationale Veröffentlichungsnummer: WO 2007/023128

(56) Entgegenhaltungen:
- EP-A1- 0 409 039
- WO-A-02/094422
- NL-A- 8 203 579
- US-A- 3 436 058
- US-A- 4 057 226

## Beschreibung

Die Erfindung betrifft ein elektromotorisches Küchengerät, vorzugsweise eine elektromotorische Solo- oder Universalküchenmaschine, umfassend mindestens ein Werkzeug zum Bearbeiten von Nahrungsmitteln wie z.B. einer Teigmasse, mindestens eine Werkzeugkupplung zum Verbinden des Werkzeuges mit dem Küchengerät, einen Antriebsmechanismus zum Antreiben des Werkzeugs, und einen Teigabweiser an der Werkzeugkupplung zum Schützen des Antriebsmechanismus vor eindringenden Nahrungsmitteln.

DE 25 51 842 offenbart eine elektromotorisch betriebene Universalküchenmaschine, bei der ein Werkzeug eine Taumelbewegung durchführt, wobei das Werkzeug sich um eine auf einer Kegelfläche wandernde Achse dreht und hierdurch eine Teigmasse rührt, knetet oder mischt.

DE 79 33 483 offenbart eine Küchenmaschine zum Kneten von Teig, wobei ein Knetarm einen mit dem Werkzeug mitdrehenden, tellerförmigen Teigabweiser aufweist, um aufsteigenden Teig von einem im Inneren der Küchenmaschine befindlichen Antriebsmechanismus fernzuhalten.

CH 491 603 offenbart eine Vorrichtung zum Durchmischen und Durchkneten von Massen, insbesondere zur Zubereitung von Teig, mit einem als Trennscheibe ausgebildeten Teigabweiser, der sich nicht mit dem Werkzeug dreht, sondern relativ zum Werkzeug bewegt, so dass aufsteigende Masse von dem Teigabweiser abgerissen wird und nicht in das Innere des Küchengeräts gelangen kann.

Die US 4 057 226 A offenbart eine motorische Mischvorrichtung mit einem Mischer, bei welcher das Mischgut von den Antriebsteilen mittels einer flexiblen Membran getrennt ist. Auch die WO 02/09442 A, US 3 436 058 A, EP 0 409 039 A und NL 8 203 579 A werden unterschiedliche Mischanordnungen offenbart.

Es ist Aufgabe der vorliegenden Erfindung, ein elektromotorisches Küchengerät bereitzustellen, mit dem Nahrungsmittel, insbesondere Teigmassen, bearbeitet werden können und dessen Inneres vor Verunreinigungen von außen, insbesondere vor eindringenden Nahrungsmitteln, zuverlässig geschützt wird.

Diese Aufgabe wird erfindungsgemäß durch das Küchengerät wie in dem unabhängigen Anspruch angegeben gelöst. Weitere vorteilhafte Einzelheiten und Weiterbildungen, die jeweils einzeln angewandt oder beliebig miteinander kombiniert werden können, sind Gegenstand der abhängigen Ansprüche.

Das erfindungsgemäßen elektromotorisches Küchengerät, vorzugsweise die elektromotorische Solo- oder Universalküchenmaschine, umfasst mindestens ein Werkzeug zum Bearbeiten von Nahrungsmitteln wie z.B. eine Teigmasse, mindestens eine Werkzeugkupplung zum Verbinden des Werkzeuges mit dem Küchengerät, einen Antriebsmechanismus zum Antreiben des Werkzeugs, und einen Teigabweiser an der Werkzeugkupplung zum Schützen des Antriebsmechanismus vor Kontakt mit Verunreinigungen, insbesondere vor den Nahrungsmitteln, wobei der Teigabweiser als, insbesondere rotationssymmetrische, Dichtungsmembran ausgebildet ist.

Mit Hilfe der Dichtungsmembran wird ein Eindringen von Flüssigkeit, Teigmasse oder anderen Verunreinigungen in den Antriebsmechanismus verhindert. Der Antriebsmechanismus kann eine Getriebestufe, insbesondere ein Planetengetriebe, sein. Durch den Antriebsmechanismus wird das Werkzeug in Bewegung gesetzt, wobei sich das Werkzeug um eine Drehachse drehen kann, deren räumliche Lage sich zeitlich ändern kann, wie es z.B. bei der Drehachse eines Planetenrads eines Planetengetriebes der Fall ist, bei dem sich die Planetenradachse auf einer Zylinderfläche (bei zylindrischen Planetenrädern) oder auf einer Kegelfläche (bei konusförmigen Planetenrädern) bewegt. Die Dichtungsmembran ist insbesondere im Wesentlichen rotationssymmetrisch, sie kann auch einen rechteckförmigen oder ovalen Querschnitt aufweisen.

Mit Hilfe der Dichtungsmembran wird eine besonders hohe Dichtigkeit erzielt und die Dichtungsmembran arbeitet auch über einen langen Zeitraum zuverlässig. Die Dichtungsmembran ist vergleichsweise verschleißarm.

Unter einer Dichtungsmembran wird insbesondere eine im Wesentlichen zweidimensionale Schicht verstanden, d.h. eine Wandung, deren Dicke sehr viel geringer als ihre seitliche Ausdehnung ist. Die Dichtungsmembran kann ein Elastomer, d.h. ein Polymer mit gummielastischen Eigenschaften, umfassen bzw. daraus bestehen. Die Dichtungsmembran kann auch ein Kunststoffgewebe oder eine Kunststofffolie umfassen. Mit Hilfe der Dichtungsmembran wird eine flexible, d.h. auch für verschwenkbare Drehdurchführungen geeignete, Abdichtung bewirkt. Vorteilhafterweise ist die Dichtungsmembran elastisch.

Die Dichtungsmembran weist **erfindungsgemäß** eine Öffnung zum Durchstecken einer Welle für das Werkzeug auf und ist entlang einer um die Öffnung **verlaufenden** geschlossenen Linie an der Werkzeugkupplung befestigt. Die Welle kann ein Kupplungselement zur Aufnahme eines Werkzeugs, insbesondere eines Schafts des Werkzeugs, aufweisen. Die Welle kann antriebsseitig fixiert sein und ist somit Teil des Antriebsmechanismus. Alternativ bildet sie einen Teil des Werkzeugs.

In der Öffnung ist **erfindungsgemäß** ein Gleitlager oder eine Kunststoffbuchse zur dichten Aufnahme der Welle vorgesehen. Mit Hilfe des Gleitlagers bzw. der Kunststoffbuchse wird hierbei eine abgedichtete Drehdurchführung hergestellt.

Das Werkzeug ist insbesondere um eine Momentandrehachse drehbar, wobei die Momentandrehachse relativ zum Küchengerät veränderlich ist. Beispielsweise rotiert das Werkzeug um seine Längsachse und die Längsachse wird um ein Drehzentrum verschwenkt bzw. gedreht. Befindet sich das Drehzentrum außerhalb der Längsachse und die Schwenkachse ist parallel zur Längsachse, bewegt sich die Momentandrehachse auf einer Kreisbahn, wobei sie sich stets innerhalb einer Zylinderoberfläche bewegt. Befindet sich das Drehzentrum entlang der Drehachse, bewegt sich die Momentandrehachse auf einer Kegelfläche, wenn die Schwenkachse nicht parallel ist mit der Drehachse. Die Momentandrehachse ist dann zeitlich wie räumlich veränderlich. Eine veränderliche Momentandrehachse kann beispielsweise mit Hilfe eines Planetengetriebes, bei dem das Werkzeug auf ein Planetenrad gesteckt ist, so dass die Längsachse des Werkzeugs mit der Planetenradachse zusammenfällt, bewirkt werden. Die Momentandrehachse wandert insbesondere auf einer Kegelfläche oder Zylinderfläche.

Die Dichtungsmembran kann aus einem Elastomer, d.h. aus einem Polymer mit gummielastischem Verhalten, hergestellt sein.

Die Dichtungsmembran ist insbesondere durch einen Balg, insbesondere einen Faltenbalg, gebildet. Mit Hilfe der Biegefalten des Faltenbalges kann eine räumlich bzw. zeitlich komplexe Bewegung der Momentandrehachse des Werkzeugs durchgeführt werden und der Antriebsmechanismus zuverlässig abgedichtet werden.

Die Dichtungsmembran weist insbesondere mindestens eine, insbesondere mindestens zwei, beispielsweise mindestens drei, Biegefalten auf.

Die Dichtungsmembran kann einen Kegelabschnitt aufweisen. Vorteilhafterweise ist die Öffnung bzw. die Welle in der Spitze des Kegelabschnitts vorgesehen. In dem Kegelabschnitt verjüngt sich der Querschnitt der Dichtungsmembran. Die Dichtungsmembran kann trichterförmig sein.

Die Dichtungsmembran weist insbesondere eine Dicke auf, die weniger als ein Fünftel, insbesondere weniger als ein Zehntel, ihres Durchmessers beträgt. Die Dicke der Dichtungsmembran ist im Vergleich zur ihrer Ausdehnung innerhalb der Membranebene dünn, so dass sie leicht biegsam bzw. knickbar ist und elastische Verformungen einfach und reversibel aufnehmen kann.

Das Werkzeug kann ein Pürier-, Misch-, Häcksel-, Knet- und/oder Schneidwerk, ein Schlag- bzw. Rührbesen, ein Getränkemixer, ein Durchlaufschnitzler, eine Getreidemühle, eine Zitrus- bzw. Fruchtpresse, ein Fleischwolf, und/oder ein Mixerbehälter sein.

Der Teigabweiser weist insbesondere eine metallische, insbesondere mit der Dichtungsmembran im Wesentlichen konzentrische, Lochscheibe auf. Mit Hilfe der Lochscheibe kann die Dichtungsmembran besonders einfach gereinigt werden. Hierzu besteht die Lochscheibe aus korrosionsbeständigem Material wie z.B. Edelstahl. Außerdem kann hierdurch die Dichtungsmembran einfach auf die Werkzeugkupplung aufgesetzt und mit der Werkzeugkupplung befestigt werden.

Weitere vorteilhafte Einzelheiten und Ausgestaltungen, die jeweils angewandt oder beliebig miteinander kombiniert werden können, werden anhand der folgenden Zeichnung, welche die Erfindung nicht einschränken, sondern lediglich exemplarisch illustrieren soll, näher erläutert.

Es zeigen schematisch:
- Fig. 1: ein erfindungsgemäßes Küchengerät in einer perspektivischen Ansicht von oben,
- Fig. 2: einen in ein erfindungsgemäßes Küchengerät eingesetzten Mixerbehälter des erfindungsgemäßen Küchengeräts im Längsschnitt mit eingesetztem Behälterdeckel;
- Fig. 3: einen in ein erfindungsgemäßes Küchengerät eingesetzten Mixerbehälter im Längsschnitt ohne eingesetztem Behälterdeckel;
- Fig. 4: eine Ausführungsform eines Magnetschalters eines erfindungsgemäßen Küchengeräts im geöffneten Zustand im Querschnitt;
- Fig. 5: den Magnetschalter nach Fig. 4 im zusammengebauten Zustand des Küchengeräts;
- Fig.6: eine weitere Ausführungsform des Magnetschalters eines erfindungsgemäßen Küchengeräts im zusammengebauten Zustand des Küchengeräts;
- Fig. 7: eine weitere Ausführungsform eines Magnetschalters eines erfindungsgemäßen Küchengeräts in geöffneter Stellung;
- Fig. 8: den Magnetschalter nach Fig. 7 in geschlossener Stellung;
- Fig. 9: einen Ausschnitt aus einem erfindungsgemäßen Küchengeräts mit einem Mixerbehälterabschnitt und einer Sicherheitsfixierung;
- Fig. 10: eine Dichtungsmembran an einer Werkzeugkupplung eines erfindungsgemäßen Küchengeräts im Querschnitt;
- Fig. 11: die Dichtungsmembran nach Fig. 10 in der Draufsicht;
- Fig. 12 - 15: verschiedene Ausführungsformen einer Dichtungsmembran eines erfindungsgemäßen Küchengeräts im Querschnitt.

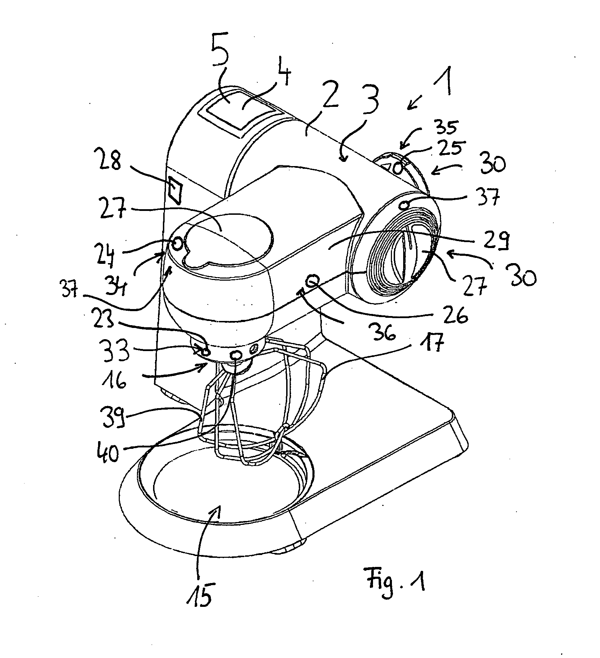

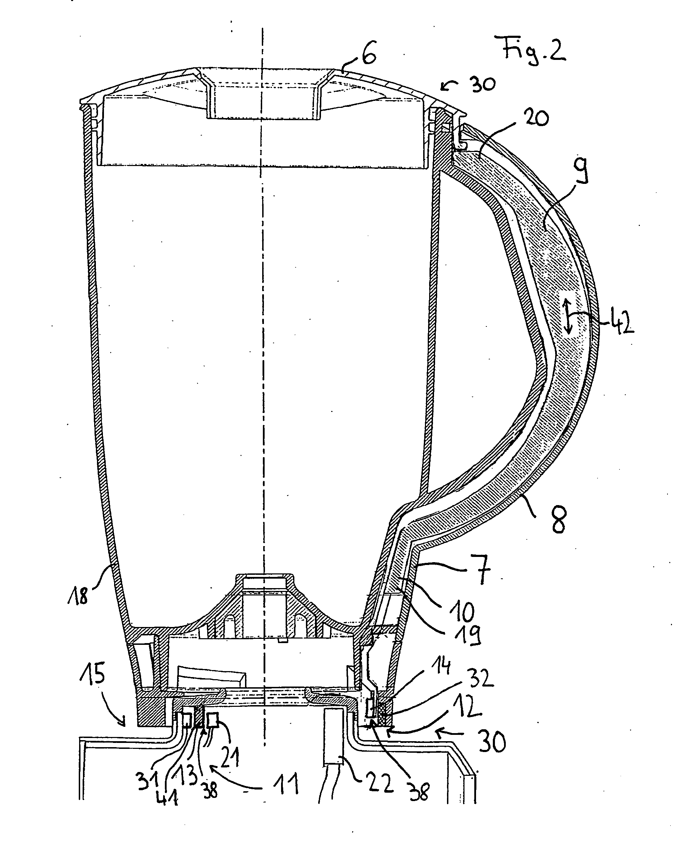

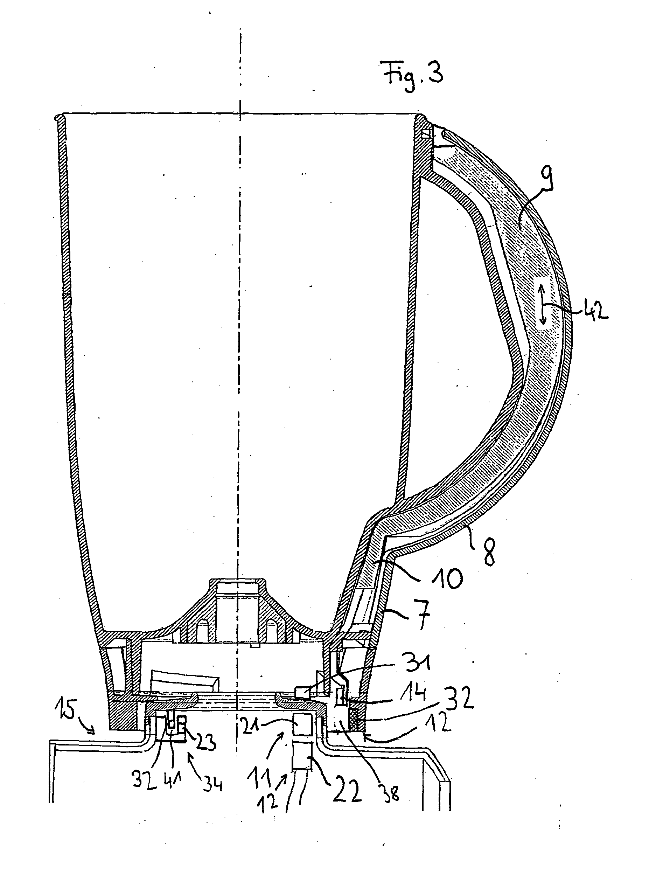

Fig. 1 zeigt ein erfindungsgemäßes Küchengerät 1 mit einem Gerätegehäuse 2, welches einen Elektromotor 3 aufweist, der mit einem Einschalter 4 eingeschaltet werden kann. Der Einschalter 4 ist erst dann wirksam bzw. erst dann aktivierbar, wenn er durch eine Sicherheitsverriegelung 5 freigegeben ist. Mit Hilfe der Sicherheitsverriegelung 5 wird sichergestellt, dass ein als Rührbesen 39 ausgestaltetes erstes Werkzeug 17 bzw. ein als Mixerbehälter 7 ausgestaltetes zweites Werkzeug 18 (siehe Fig. 2 und 3) ordnungsgemäß in das Küchengerät 1 eingesetzt ist. Mit der Sicherheitsverriegelung 5 wird auch sichergestellt, dass ein Behälterdeckel 6 für den Mixerbehälter 7 (s. Fig. 2 und 3) ordnungsgemäß verschlossen ist. Nachdem die Sicherheitsverriegelung 5 erkannt hat, dass das Küchengerät 1 vollständig zusammengebaut wurde bzw. die Werkzeuge 17, 18 ordnungsgemäß angeschlossen wurden, wird der Einschalter 4 aktiviert, so dass erst zu diesem Zeitpunkt der Elektromotor 3 bzw. das Küchengerät 1 in Betrieb genommen werden kann. Hierdurch wird die Sicherheit bei der Verwendung des Küchengeräts 1 erheblich gesteigert. Das Küchengerät 1 weist eine erste 15, zweite 16 und eine dritte 27 Werkzeugkupplung auf, welche von entsprechenden Magnetsensoren 21-26 (s. a. Fig. 2 und 3) überwacht werden. Beispielsweise wird die zweite Werkzeugkupplung 16 mit Hilfe eines dritten Magnetschalters 33, der einen dritten Magnetsensor 23 aufweist, überwacht. Eine dritte Werkzeugkupplung 27 wird mit Hilfe eines Sensors 37, der als vierter Magnetsensor 24 ausgestaltet sein kann, überwacht. Der vierte Magnetsensor 24 ist einem vierten Magnetschalter 34 zugeordnet, mit dem ein vollständiges Verschließen der dritten Werkzeugkupplung 27 überwacht wird. Die Magnetschalter 11, 12, 33-36 bzw. die Magnetsensoren 21-26 sind so beschaffen bzw. an den jeweiligen Werkzeugkupplungen 17, 18, 27 derart angeordnet, dass sie erst dann betätigt werden können, wenn eine von diesem Magnetschalter 11, 12, 33-36 zu überwachende Schnittstelle 30 vollständig funktionstüchtig, abgesichert bzw. verschlossen ist. Das Küchengerät 1 weist einen Gerätegehäusedeckel 29 auf, mit dem das Gerätegehäuse 2 geöffnet werden kann. Auch der Gerätegehäusedeckel 29 wird mit Hilfe eines Magnetschalters 36 und eines sechsten Magnetsensors 26 überwacht. Die erste Werkzeugkupplung 15 ist dazu geeignet und bestimmt, einen Mixerbehälter 7 sicher aufzunehmen. Ein Werkzeugtypsensor 40 an dem Küchengerät 1 erfasst den Typ des eingesetzten Werkzeugs 17 und eine Gerätesteuerung 28 steuert den Elektromotor 3 entsprechend an, wobei insbesondere die Geschwindigkeit des Werkzeugs 17 geeignet gewählt wird. Ein fünfter Magnetsensor 25 überwacht als Teil eines weiteren Magnetschalters 35 die Schnittstelle 30, welche zur Aufnahme einer Getreidemühle (nicht dargestellt) geeignet ist. Durch die Verwendung der Vielzahl von Magnetschaltern 11, 12, 33-36 bzw. der Magnetsensoren 21-26 wird ein Betriebszustand des Küchengeräts 1 sicherheitstechnisch und funktionstechnisch im Wesentlichen vollständig erfasst. Die Magnetsensoren 21-26 sind als Reed-Sensoren vorgesehen.

Fig. 2 zeigt einen Mixerbehälter 7 des erfindungsgemäßen Küchengeräts 1 im Längsschnitt mit einem Behältergriff 8. Mit Hilfe eines in dem Behältergriff 8 zwischen einer ersten und einer zweiten Position hin- und her beweglichen Gestänges 9, welches als Koppelstange 10 ausgestaltet ist, wird die Schnittstelle 30 an einem Behälterdeckel 6 überwacht, indem das Gestänge 9 bei ordnungsgemäß eingesetztem Behälterdeckel 6 auf einen zweiten Schaltschieber 14 drückt, der dadurch in einen Zwischenraum 38 zwischen einem zweiten Magnetsensor 22 und einen am Mixerbehälter 7 angeordneten zweiten Magneten 32 geschoben wird. Der zweite Schaltschieber 14 ist aus einem ferromagnetischen Material gefertigt und lenkt das von dem zweiten Magneten 32 erzeugte magnetische Feld auf den zweiten Magnetsensor 22, der dann ein entsprechendes Signal an die Gerätesteuerung 28 liefert. Der Schaltschieber 14 kann ein quaderförmiger Block aus Eisen sein. An der ersten Werkzeugkupplung 15 ist darüber hinaus ein erster Magnetschalter 11 angeordnet, mit dem ein ordnungsgemäßes Einsetzen des Mixerbehälters 7 in die erste Werkzeugkupplung 15 überwacht wird, indem ein erster Schaltschieber in einen Zwischenraum 38 zwischen einem ersten Magnetsensor 21 und einem ersten Magnet 31 eingeschoben wird, so dass das von dem ersten Magnet 31 erzeugte Magnetfeld auf den ersten Magnetsensor gelenkt wird, so dass dieser ein ordnungsgemäßes Verbinden des Mixerbehälters 7 mit der ersten Werkzeugkupplung 15 anzeigt. Der erste Magnetschalter 11 weist eine Vertiefung 41 auf, in welche der erste Schaltschieber 13 eingreifen muss, um den ersten Magnetschalter 11 zu betätigen. Der Behälterdeckel 6 gelangt an einem deckelseitigen Ende 20 des Gestänges 9 mit dem Gestänge 9 in mechanischen Eingriff. Das Gestänge 9 bewegt sich entlang einer Bewegungsrichtung 42 zwischen einer ersten und einer zweiten Position hin und her und positioniert somit einen zweiten Schaltschieber 14 eines zweiten Magnetschalters 12 in einen Zwischenraum 38 zwischen einem zweiten Magnet 32 und einem zweiten Magnetsensor 22. Der zweite Magnetschalter 12 ist an der Schnittstelle 30 angeordnet.

Fig. 3 zeigt einen Mixerbehälter 7 ohne Behälterdeckel 6 im Längsschnitt. Man erkennt, dass der zweite Schaltschieber nicht in dem Zwischenraum 38 angeordnet ist, so dass der zweite Magnetschalter 12 mit dem zweiten Magnetsensor 22 und dem zweiten Magnet 32 nicht geschlossen ist. Folglich kann das Küchengerät 1 nicht in Betrieb genommen werden. Ein vierter Magnetschalter 34 weist einen Magneten 32 auf, der den ersten Magnetsensor 21 bei einem ordnungsgemäß in die Werkzeugkupplung 15 eingesetzten Mixerbehälter 7 betätigt. Ein weiterer Magnetschalter 33 ist an der ersten Werkzeugkupplung 15 vorgesehen. Der weitere Magnetsensor umfasst eine Vertiefung 41, in der ein dritter Magnetsensor 23 angeordnet ist und in die der zugeordnete zweite Magnet 32 eingreift. Durch die Vertiefung wird der dritte Magnetsensor 23 von dem Einfluss von externen Magneten (nicht dargestellt) geschützt, da diese hierdurch von dem dritten Magnetsensor 23 hinreichend weit beabstandet werden. Hierdurch wird die Sicherheit der Überwachung und die Funktionszuverlässigkeit der Sicherheitsregelung 5 weiter gesteigert.

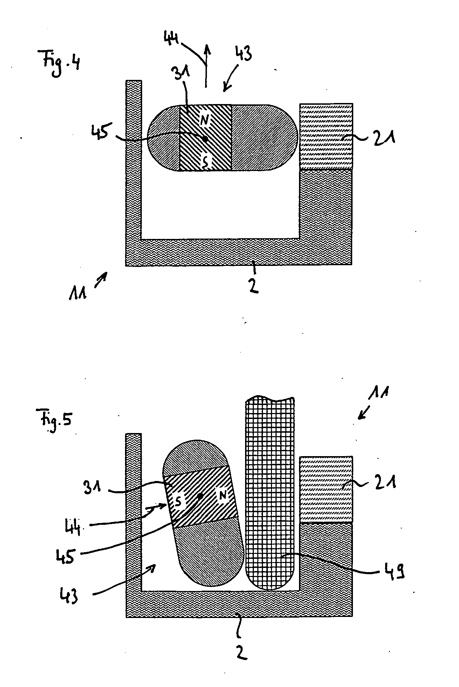

Fig. 4 zeigt eine Ausführungsform eines Magnetschalters 11 eines erfindungsgemäßen Küchengeräts 1 im geöffneten Zustand im Querschnitt, wobei ein Mittel 43 zur Beeinflussung des Magnetfelds durch die Drehbarkeit des Magneten 31 gegeben ist. Der Magnet 31, dessen Polarität Nord (N) - Süd (S) durch die Nord-Süd-Richtung 44 gegeben ist, ist ortsfest und drehbar um eine Achse 45 an dem Gerätegehäuse 2 gelagert. Im geöffneten Zustand des Magnetschalters 11 ist die Nord-Süd-Richtung 44 tangential zu konzentrischen Kreisen, deren Zentrum mit dem Magnetsensor 21 zusammenfällt.

Fig. 5 zeigt den Magnetschalter 11 nach Fig. 4 im zusammengebauten Zustand des Küchengeräts 1, wobei ein Mixerbehälterabschnitt 49 eines Mixerbehälters 7 in den Magnetschalter 11 eingreift und den Magneten 31 mit seiner Nord-Süd-Richtung 44 um die Achse 45 derart dreht, dass der eine Pol (N) des Magneten 31 in die Nähe des Magnetsensors 21 gelangt. Hierdurch übersteigt das Magnetfeld des Magneten 31 am Magnetsensor 21 einen bestimmten Wert und ein Schaltvorgang wird auslöst.

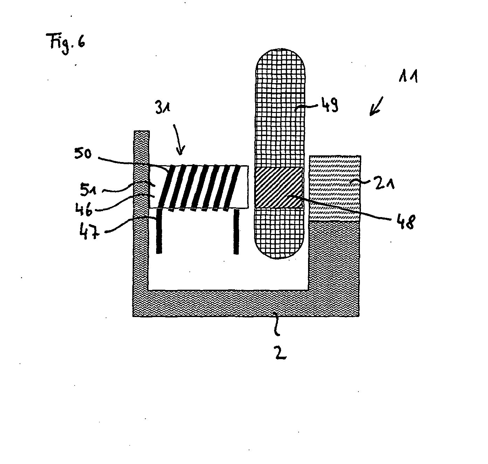

Fig. 6 zeigt eine weitere Ausführungsform des Magnetschalters 11 eines erfindungsgemäßen Küchengeräts 1 im zusammengebauten Zustand des Küchengeräts 1, wobei ein Mixerbehälterabschnitt 49 eines Mixerbehälters 7 in den Magnetschalter 11 eingreift. Hierbei besteht der Magnet 31 aus einem ersten Einzelmagnet 46, der als Permanentmagnet 51 ausgestaltet ist, und einem zweiten Einzelmagnet 47, der durch einen um den Permanentmagneten 52 gewickelten Elektromagnet 50 gebildet ist. Durch den Elektromagneten 50 kann auf das am Magnetsensor 21 wirkende Magnetfeld Einfluss genommen werden. Der Mixerbehälterabschnitt 49 weist ein magnetisierbares Material 48 auf, durch welches das Magnetfeld des zusammengesetzten Magneten 31 auf den Magnetsensor 21 gelenkt und dort konzentriert wird.

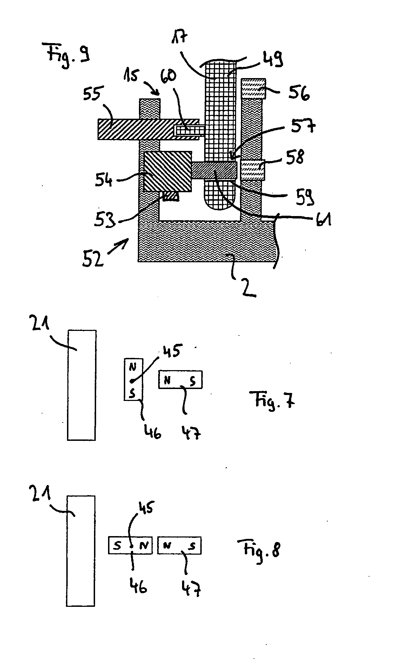

Figuren 7 und 8 zeigen eine weitere Ausführungsform eines Magnetschalters eines erfindungsgemäßen Küchengeräts in einer geöffneten (Fig. 7) bzw. in einer geschlossenen (Fig. 8) Stellung, wobei in Figur 7 ein erster Einzelmagnet 46 und ein zweiter Einzelmagnet 47 gekreuzt zueinander stehen und das am Magnetsensor 21 wirkende Magnetfeld nicht ausreicht, um den Magnetsensor 21 zu schließen. In Figur 8 kommt der Südpol (S) des ersten Einzelmagneten 46 dem Magnetsensor 21 hinreichend nahe, um einen Schließen des Schalters zu bewirken. Der zweite Einzelmagnet 47 hat die Funktion, mit seinem Nordpol (N) den Nordpol (N) des ersten Einzelmagneten (46) wegzudrücken und somit den ersten Einzelmagneten 46 stets zur geöffneten Stellung hin zu drücken, so dass das Küchengerät 1 nur dann betriebsbereit ist, wenn ein Werkzeug eingesetzt ist. Der zweite Einzelmagnet 47 bewirkt somit eine Stabilisierung des abgesicherten Zustands des Küchengeräts und erhöht somit die Sicherheit weiter.

Fig. 9 zeigt einen Ausschnitt aus einem erfindungsgemäßen Küchengerät 1 mit einem Mixerbehälterabschnitt 49 und einer Sicherheitsfixierung 52 zum Verriegeln des Werkzeugs 17 in der Werkzeugkupplung 15, wobei die Sicherheitsfixierung 52 an einem Gerätegehäuse 2 des Küchengeräts 1 befestigt ist und mit dem Werkzeug 17 zusammenwirkt. Der Mixerbehälterabschnitt 49 weist ein als Riegelaufnahme 59 ausgebildetes Verriegelungselement 57 auf, in welches ein Riegel 61 eingreift, und somit das Werkzeug 17 in der Werkzeugkupplung 15 fixiert. Der Riegel 61 wird mit Hilfe eines elektrisch betätigten Riegelmechanismus 54 hin und her bewegt. Insbesondere wird der Riegel 61 vor Inbetriebnahme des Küchengeräts 1 in die Riegelaufnahme 59 geschoben und erst nach völligem Stillstand des Elektromotors wieder zurückbewegt, wobei der Nachlauf berücksichtigt wird. Hierdurch ist ein Trennen des Werkzeugs 17 vom Küchengerät 1 nur dann möglich, wenn das Küchengerät vollständig still steht. Mit Hilfe eines Mittels 56 zur Erkennung eines Werkzeugtyps kann der Nachlauf des jeweiligen Werkzeugs abgeschätzt werden und somit die minimal erforderliche Dauer der Verriegelung festgelegt werden. Mit Hilfe eines Sensormittels 58 wird festgestellt, ob die Verriegelung tatsächlich wirksam bzw. aktiv ist. Ein mechanisch betätigter Riegelmechanismus 55 unterstützt weiter die Verrieglung. Das Werkzeug 17 kann anstelle einer Riegelaufnahme 59 auch einen Vorsprung 60 aufweisen (hier in Verbindung mit dem mechanisch betätigten Verriegelungsmechanismus 55 gezeigt), der in entsprechender Weise mit der Werkzeugkupplung 15 in Eingriff gelangt und somit die Sicherheitsfixierung 52 bewirkt. Die Sicherheitsfixierung 52 dient dazu, ein Herausnehmen bzw. Entkoppeln des Werkzeugs 17 aus der Werkzeugkupplung 15 während eines Betriebs des Küchengeräts 1, insbesondere, während sich der Elektromotor 3 des Küchengeräts 1 noch dreht, zu verhindern. Hierdurch wird sichergestellt, dass eine Bedienperson des Küchengeräts 1 nicht mit sich noch bewegenden Teilen des Küchengeräts 1, insbesondere nicht mit scharfen Kanten, wie z.B. einem Schneidwerk, eines Werkzeugs 17 in Berührung kommt. Darüberhinaus wird sichergestellt, dass das Küchengerät 1 bzw. das Werkzeug 17 keinen Schaden nimmt, wenn das Werkzeug im Zustand mit sich drehenden Teilen von dem Küchengerät getrennt wird.

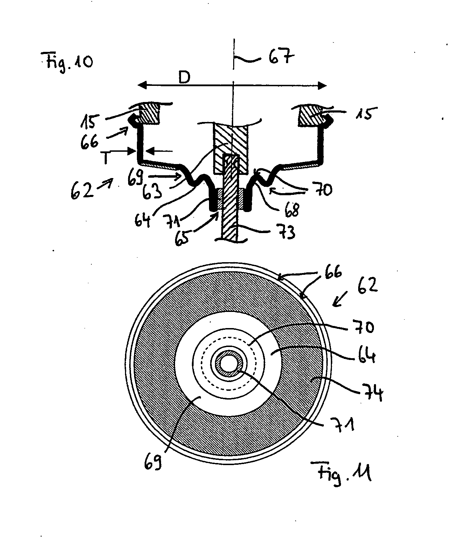

Fig. 10 zeigt eine Dichtungsmembran 64 in einer Werkzeugkupplung 15 eines erfindungsgemäßen Küchengeräts 1 im Querschnitt. Fig. 11 zeigt die Dichtungsmembran nach Fig. 10 in der Draufsicht. Der Teigabscheider 62, der verhindert, dass Teigmasse, Nahrungsmittel oder andere Verunreinigungen (nicht dargestellt) von außen in einen Antriebmechanismus 63 für das Werkzeug 17 gelangen, ist als dünne Dichtungsmembran 64 ausgestaltet, die eine Öffnung 65 aufweist und entlang einer geschlossenen Linie 66 um die Öffnung 65 mit einer Werkzeukupplung 15 verbunden ist. Die Öffnung 65 weist ein Gleitlager 71 auf, durch welches eine Welle 73 für das Werkzeug 17 gesteckt wird, so dass das Werkzeug 17 eine Drehung um die Längsachse des Werkzeugs 17 durchführen kann. Der Antriebsmechanismus 67 ist so gestaltet, dass sich im Betrieb die räumliche Lage der Welle 73 ändert, wodurch eine Momentandrehachse 67 zeitlich veränderlich ist. Beispielsweise dreht sich das Werkzeug 17 mit einer ersten, schnellen Frequenz um die Längsachse des Werkzeugs und die Längsachse des Werkzeugs ändert mit einer zweiten langsamen Frequenz seine Lage im Raum. Die erste Frequenz kann mindestens viermal, insbesondere mindestens sechsmal, beispielsweise mindestens zehnmal, so groß sein wie die zweite Frequenz. Die Dichtungsmembran 64 ist als Balg 68 ausgestaltet, der Biegefalten 70 aufweist, um die verschiedenen Raumbewegungen der Welle 73 aufnehmen zu können. Mit Hilfe des Gleitlagers 71 wird sichergestellt, dass die Dichtungsmembran 64 nicht an der Welle 73 reibt, welches zu Verschleiß führen würde. Das Gleitlager 71 dichtet die Welle 73 ab. Die Dichtungsmembran 64 weist einen Kegelabschnitt 69 auf, der die Knickfähigkeit der Dichtungsmembran 64 unterstützt, wodurch eine Verschleißanfälligkeit verringert wird. Eine auf der Dichtungsmembran 64 befestigte, insbesondere durch Vulkanisation fixierte, Lochscheibe 74 aus Edelstahl erleichtert die Reinigung der Dichtungsmembran 64, welche aufgrund ihres großen Durchmessers D einfach und sicher an der Werkzeugkupplung 15 befestigt werden kann. Die Dichtungsmembran 64 weist eine Dicke T auf, die sehr viel kleiner als der Durchmesser der Dichtungsmembran 64 ist.

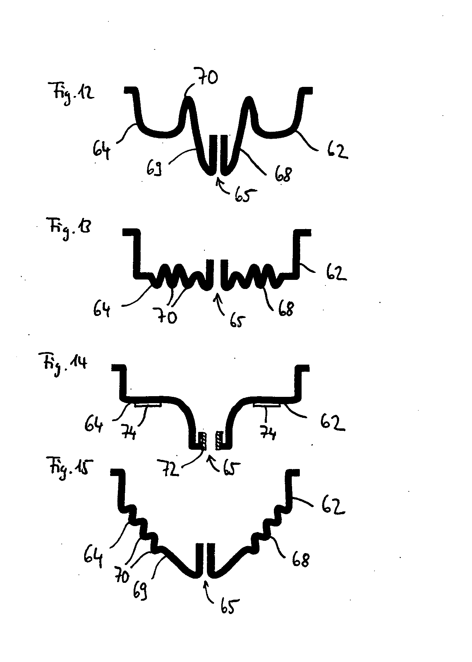

Fig. 12 bis Fig. 15 zeigen verschiedene Ausführungsformen einer Dichtungsmembran 64 eines erfindungsgemäßen Küchengeräts 1 im Querschnitt, wobei mit Hilfe der Biegefalten 70 und der Kegelabschnitte 69 eine besondere Flexibilität der Dichtungsmembran 64 bewirkt wird. Die Öffnung 65 kann eine Kunststoffbuchse 72 zur Aufnahme eines Werkzeugs 17 aufweisen.

Im Folgenden werden verschiedene weitere Aspekte, die mit der Erfindung in einem Zusammenhang stehen, beschrieben. Die einzelnen Aspekte können jeweils einzeln angewandt, d.h. unabhängig voneinander, oder beliebig miteinander kombiniert werden:

Ein besonders vorteilhaftes Küchengerät 1, insbesondere elektromotorisches Küchengerät 1, vorzugsweise elektromotorische Solo- oder Universalküchenmaschine, kann einen Einschalter 4 und eine dem Einschalter 4 zugeordnete Sicherheitsverriegelung 5 umfassen, die nur dann den Einschalter 4 entriegelt und einen Betrieb des Küchengeräts 1 zulässt, wenn das Küchengerät 1 ordnungsgemäß zusammengebaut ist, und ist **dadurch gekennzeichnet, dass** die Sicherheitsverriegelung 5 mindestens vier, vorzugsweise mindestens sechs, separate Magnetschalter 11, 12, 33 - 36 mit Magnetsensoren 21 - 26, insbesondere Reed-Sensoren, aufweist. Insbesondere ist mindestens ein Magnetschalter 11, 12, 33 - 36 mit mindestens einem Magnetsensor 21 - 26 vorgesehen, wobei der Magnetsensor 21 -26 ein Reed-Sensor ist. In einer Ausgestaltung weist das Küchengerät 1 mindestens einen ansteckbaren Mixerbehälter 7 auf, der mit einer ersten Werkzeugkupplung 15 mit dem Küchengerät 1 verbindbar ist, wobei an der ersten Werkzeugkupplung 15 ein erster Magnetsensor 21 für die Überwachung einer ordnungsgemäßen Verbindung des Mixerbehälters 7 mit dem Küchengerät 1 vorgesehen ist. In einer weiteren Ausgestaltung weist der Mixerbehälter 7 einen Behälterdeckel 6 auf und ein zweiter Magnetsensor 22 ist für die Überwachung eines ordnungsgemäßen Schließens des Mixerbehälters 7 mit dem Behälterdeckel 6 vorgesehen. Der zweite Magnetsensor 22 kann an der ersten Werkzeugkupplung 15, vorzugsweise am Küchengerät 1, angeordnet sein, wobei insbesondere an dem Mixerbehälter 7, insbesondere in einem an dem Mixerbehälter 7 vorgesehenen Behältergriff 8, ein zwischen einer ersten Position und einer zweiten Position hin und her bewegliches Gestänge 9, insbesondere eine Koppelstange 10, vorgesehen ist, welches derart mit dem Behälterdeckel 6 in Eingriff gelangt, dass das Gestänge 9 bei ordnungsgemäß geschlossenem Behälterdeckel 6 die erste Position und sonst die zweite Position einnimmt, wobei mit Hilfe des Gestänges 9 der zweite Magnetsensor 2 betätigbar ist. In einer Weiterbildung weist das Küchengerät 1 mindestens ein ansteckbares erstes Werkzeug 17, insbesondere ein Pürier-, Misch-, Häcksel-, Knet- und/oder Schneidwerk, Schlag- bzw. Rührbesen 39, Getränkemixer, Durchlaufschnitzler, Getreidemühle, Zitrus- bzw. Fruchtpresse und/oder Fleischwolf, auf, das mit einer zweiten Werkzeugkupplung 16 mit dem Küchengerät 1 verbindbar ist, wobei an der zweiten Werkzeugkupplung 16 ein dritter Magnetsensor 23 für die Überwachung einer ordnungsgemäßen Verbindung des ersten Werkzeugs 17 mit dem Küchengerät 1 vorgesehen ist. In einer weiteren Weiterbildung weist das Küchengerät 1 mindestens ein ansteckbares zweites Werkzeug 18, insbesondere ein Pürier-, Misch-, Häcksel-, Knet- und/oder Schneidwerk, Schlag- bzw. Rührbesen 39, Getränkemixer, Durchlaufschnitzler, Getreidemühle, Zitrus- bzw. Fruchtpresse und/oder Fleischwolf, auf, das mit einer dritten Werkzeugkupplung 27 mit dem Küchengerät 1 verbindbar ist, wobei an der dritten Werkzeugkupplung 27 ein vierter Magnetsensor 24 für die Überwachung einer ordnungsgemäßen Verbindung des zweiten Werkzeugs 18 mit dem Küchengerät 1 vorgesehen ist. Vorteilhafterweise weist das Küchengerät 1 mehrere, insbesondere mindestens 3, Werkzeugkupplungen 15, 16, 27 für verschiedene Werkzeuge 17, 18, insbesondere Pürier-, Misch-, Häcksel-, Knet- und/oder Schneidwerke, Mixerbehälter 7 und/oder Fleischwolf, auf und jeder Werkzeugkupplung 15, 16, 27 ist mindestens ein Magnetsensor 21- 26 zugeordnet. In einer weiteren Weiterbildung kann mindestens ein Magnetsensor 21- 26, insbesondere können mindestens 2, vorteilhafterweise ein überwiegender Anteil der, Magnetsensoren 21- 26 den Typ des eingesetzten Werkzeugs 17, 18 identifizieren. Insbesondere umfasst das Küchengerät 1 eine Gerätesteuerung 28, welche die Betriebsweise des Küchengeräts 1, insbesondere die Geschwindigkeit und/oder Leistungsstufe eines Elektromotors 3, entsprechend der Identifizierung beeinflusst. In einer weiteren Ausgestaltung weist das Küchengerät 1 ein Gerätegehäuse 2 und einen Gerätegehäusedeckel 29 auf und ein fünfter Magnetsensor 5 ist für die Überwachung eines ordnungsgemäßen Schließens des Gerätegehäuses 2 mit dem Gerätegehäusedeckel 29 vorgesehen. In einer Weiterbildung sind die Magnetschalter 11, 12, 33 - 36 bzw. die Magnetsensoren 21 - 26 so beschaffen und/oder angeordnet, dass ein Magnetschalter 11, 12, 33 - 36 erst dann betätigt wird, wenn eine von diesem Magnetschalter 11, 12, 33 - 36 zu überwachende Schnittstelle 30 vollständig funktionstüchtig bzw. abgesichert ist. Vorteilhafterweise weist der Magnetschalter 11, 12, 33 - 36 zur Reduzierung von Störeinflüssen durch externe Magneten eine Vertiefung 41 aufweist, in der der Magnetsensor 21 - 26 angeordnet ist und in die ein Magnet 31, 32 des Magnetschalters 11, 12, 33 - 36 eingreifen kann.

Ein besonders vorteilhaftes Verfahren zum Betreiben eines Küchengeräts 1, insbesondere elektromotorisches Küchengerät 1, vorzugsweise elektromotorische Solo- oder Universalküchenmaschine, besonders bevorzugt eines erfindungsgemäßen Küchengeräts 1, wobei das Küchengerät 1 mehrere einsetzbare Werkzeuge 7, 17, 18, 39, insbesondere ein Mixerbehälter 7, Pürier-, Misch-, Häcksel-, Knet- und/oder Schneidwerke, Schlag- bzw. Rührbesen 39, Getränkemixer, Durchlaufschnitzler, Getreidemühlen, Zitrus- bzw. Fruchtpressen und/oder Fleischwolf, aufweist, wobei eines der Werkzeuge 17, 18 von dem Küchengerät 1 aufgenommen wird, ist **dadurch gekennzeichnet, dass** mit Hilfe mindestens zweier Sensoren 37, insbesondere mit Hilfe von Magnetsensoren 21 - 26, der Werkzeugtyp des eingesetzten Werkzeugs 17, 18 identifiziert wird und die Betriebsweise des Küchengeräts 1, insbesondere die Geschwindigkeit und/oder Leistungsstufe eines Elektromotors 3, entsprechend der Identifizierung beeinflusst, insbesondere angepasst, wird.

Ein besonders vorteilhaftes Küchengerät 1, insbesondere elektromotorisches Küchengerät 1, vorzugsweise elektromotorische Solo- oder Universalküchenmaschine, umfasst einen Einschalter 4 und eine dem Einschalter 4 zugeordnete Sicherheitsverriegelung 5, die den Einschalter 4 nur dann entriegelt und einen Betrieb des Küchengeräts 1 zulässt, wenn das Küchengerät 1 ordnungsgemäß zusammengebaut ist, wobei die Sicherheitsverriegelung 5 mindestens einen Magnetschalter 11, 12, 33-36 mit mindestens einem Magneten 31, 32 und mindestens einem Magnetsensor 21-26 aufweist, und wobei der Magnet ein permanentes oder niederfrequentes Magnetfeld generiert, und ist **dadurch gekennzeichnet, dass** Mittel 43 zur Beeinflussung des Magnetfelds in Abhängigkeit eines Schließzustandes des Küchengerätes vorgesehen sind. In einer Ausgestaltung kann das Magnetfeld des Magneten gedreht werden. Die Polarität des Magneten kann insbesondere umgekehrt werden. Insbesondere ist der Magnet um eine Achse quer zur Nord-Süd-Richtung des Magneten drehbar und/oder verschwenkbar. Der drehbare und/oder verschwenkbare Magnet ist insbesondere im Wesentlichen ortfest. In einer Ausgestaltung ist der Magnet um einen Winkel von mindestens 30°, insbesondere um einen Winkel von mindestens 60°, beispielsweise um 90° oder 180°, drehbar und/oder verschenkbar. Der Magnet 31, 32 kann eine Mehrzahl von Einzelmagneten 46, 47 umfassen. Der Magnet kann einen Elektromagneten 50 und/oder einen Permanentmagneten 51 umfassen. Das Mittel zur Beeinflussung 43 des Magnetfelds kann magnetisierbares Material, insbesondere einen Weichmagnet, umfassen, das mit dem Magnetfeld wechselwirken und das Magnetfeld in einem Bereich um bzw. am Magnetsensor derart konzentrieren oder abschwächen kann, dass ein Schaltungsvorgang des Magnetschalters bewirkt wird. Der Magnetsensor kann einen Reed-Sensor und/oder einen Hall-Sensor umfassen. Der Magnetschalter kann einen weichmagnetisierbaren, insbesondere ferromagnetischen, Schaltschieber aufweisen, mit dem ein von dem Magnetsensor zu erfassendes Magnetfeld beeinflusst, insbesondere an dem Magnetsensor konzentriert oder von dem Magnetsensor abgeschirmt, werden kann.

Ein vorteilhaftes Werkzeug 17 für ein Küchengerät 1, insbesondere Mixerbehälter 7, ist geeignet und bestimmt zur Verwendung mit dem erfindungsgemäßen Küchengerät 1.

Ein weiteres vorteilhaftes Werkzeug 17 für ein eine Sicherheitsverriegelung 5 aufweisendes Küchengerät 1, insbesondere Mixerbehälter 7, wobei die Sicherheitsverriegelung mindestens einen Magnetschalter 11, 12, 33 - 36 mit mindestens einem Magneten 31, 32 und mindestens einem Magnetsensor 21 - 26 aufweist, umfasst ein Mittel zur Beeinflussung 43 eines von dem Magnetsensor 21 - 26 zu erfassendes Magnetfeld, wobei das Mittel zur Beeinflussung 43 magnetisierbares Material 48, insbesondere einen Weichmagnet, aufweist, das mit dem Magnetfeld wechselwirken und das Magnetfeld in einem Bereich um bzw. an dem Magnetsensor 21 - 26 derart konzentrieren oder abschwächen kann, dass ein Schaltungsvorgang des Magnetschalters 11, 12, 33 - 36 bewirkt wird.

Ein besonders vorteilhaftes elektromotorisches Küchengerät 1, vorzugsweise elektromotorische Solo- oder Universalküchenmaschine, umfasst einen Elektromotor 3, mindestens ein Werkzeug 17, 18, mindestens eine Werkzeugkupplung 15, 16 zum Verbinden des Werkzeuges 17, 18 mit dem Küchengerät 1 und eine Sicherheitsfixierung 52 für das Werkzeug 17, 18, die der Werkzeugkupplung 15, 16 zugeordnet ist und das Werkzeug 17, 18 während eines Betriebs des Elektromotors 3 in der Werkzeugkupplung 15, 16 verriegelt. Die Sicherheitsfixierung 52 kann einen elektrisch betätigten Riegelmechanismus 54, insbesondere einen elektromagnetisch betätigten Riegelmechanismus 54, beispielsweise einen elektromagnetischen Verschluss, zur Verriegelung der Werkzeugkupplung 15, 16 aufweisen. Die Sicherheitsfixierung 52 kann insbesondere eine Zeitschaltung 53 aufweisen, welche die Werkzeugkupplung 15, 16 erst nach einer bestimmten Zeitdauer nach Ausschalten des Elektromotors 3, insbesondere nach einer Zeitdauer von 0,1 s bis 2 s, freigibt. Die Zeitschaltung 53 kann ein Mittel 56 zur Erkennung eines Werkzeugtyps aufweisen, und die Zeitdauer in Abhängigkeit des Werkzeugtyps gewählt wird. Das Werkzeug 17, 18 kann ein Verriegelungselement 57, insbesondere eine Riegelaufnahme 59 oder einen Vorsprung 60, aufweisen. Die Sicherheitsfixierung 17, 18 kann einen mechanisch betätigten Riegelmechanismus 55, insbesondere eine Raste, zur Verriegelung der Werkzeugkupplung 15, 16 aufweisen. Vorteilhafterweise weist der Riegelmechanismus 54, 55 ein Sensormittel 58 zum Erfassen des Verriegelungszustands der Sicherheitsfixierung 52 auf und ein Betrieb des Elektromotors 3 ist nur bei vollständiger Verriegelung möglich. Das Werkzeug 7, 17, 18, 39 kann ein Pürier-, Misch-, Häcksel-, Knet- und/oder Schneidwerk, Schlag- bzw. Rührbesen 39, Getränkemixer, Durchlaufschnitzler, Getreidemühle, Zitrus- bzw. Fruchtpresse, Fleischwolf, und/oder ein Mixerbehälter 7 sein.

Ein besonders vorteilhaftes Werkzeug 17 für ein Küchengerät 1, insbesondere Mixerbehälter 7, ist geeignet und bestimmt zur Verwendung mit dem erfindungsgemäßen Küchengerät 1.

Ein weiteres besonders vorteilhaftes Werkzeug 17, 18, insbesondere Mixerbehälter 7, für ein eine Sicherheitsfixierung 52 aufweisendes Küchengerät 1, wobei die Sicherheitsfixierung 52 geeignet ist, das Werkzeug 17, 18 in einer am Küchengerät 1 vorgesehenen Werkzeugkupplung 15, 16 während eines Betriebs des Küchengeräts 1 zu verriegeln, sieht vor, dass das Werkzeug 17, 18 ein Verriegelungselement 57, insbesondere eine Riegelaufnahme 59 oder einen Vorsprung 60, für eine mechanische Verriegelung bzw. Fixierung des Werkzeugs 17, 18 an bzw. in der Werkzeugkupplung 15, 16 aufweist.

Die Erfindung betrifft ein elektromotorisches Küchengerät 1, vorzugsweise elektromotorische Solo- oder Universalküchenmaschine, umfassend mindestens ein Werkzeug 17, 18 zum Bearbeiten von Nahrungsmitteln wie z.B. eine Teigmasse, mindestens eine Werkzeugkupplung 15, 16 zum Verbinden des Werkzeuges 17, 18 mit dem Küchengerät 1, einen Antriebsmechanismus 63 zum Antreiben des Werkzeugs 17, 18, und einen Teigabweiser 62 an der Werkzeugkupplung 15, 16 zum Schützen des Antriebsmechanismus 63 vor Kontakt mit Verunreinigungen, insbesondere vor den Nahrungsmitteln, wobei der Teigabweiser 62 als, insbesondere rotationssymmetrische, Dichtungsmembran 64 ausgebildet ist. Das erfindungsgemäße Küchengerät zeichnet sich durch eine besonders hohe Zuverlässigkeit im Betrieb aus.

### Bezugszeichenliste

- 1: Küchengerät
- 2: Gerätegehäuse
- 3: Elektromotor
- 4: Einschalter
- 5: Sicherheitsverriegelung
- 6: Behälterdeckel
- 7: Mixerbehälter
- 8: Behältergriff
- 9: Gestänge
- 10: Koppelstange
- 11: erster Magnetschalter
- 12: zweiter Magnetschalter
- 13: erster Schaltschieber
- 14: zweiter Schaltschieber
- 15: erste Werkzeugkupplung
- 16: zweite Werkzeugkupplung
- 17: erstes Werkzeug
- 18: zweites Werkzeug
- 19: kupplungsseitiges Ende des Gestänges 9
- 20: deckelseitiges Ende des Gestänges 9
- 21: erster Magnetsensor
- 22: zweiter Magnetsensor
- 23: dritter Magnetsensor
- 24: vierter Magnetsensor
- 25: fünfter Magnetsensor
- 26: sechster Magnetsensor
- 27: dritte Werkzeugkupplung
- 28: Gerätesteuerung
- 29: Gerätegehäusedeckel
- 30: Schnittstelle
- 31: erster Magnet
- 32: zweiter Magnet
- 33- 36: weitere Magnetschalter
- 37: Sensor
- 38: Zwischenraum
- 39: Rührbesen
- 40: Werkzeugtypsensor
- 41: Vertiefung
- 42: Bewegungsrichtung des Gestänges 9
- 43: Mittel zur Beeinflussung des Magnetfelds des Magneten 31,32
- 44: Nord-Süd-Richtung des Magneten 31, 32
- 45: Achse
- 46: erster Einzelmagnet
- 47: zweiter Einzelmagnet
- 48: magnetisierbares Material
- 49: Mixerbehälterabschnitt
- 50: Elektromagnet
- 51: Permanentmagnet
- 52: Sicherheitsfixierung
- 53: Zeitschaltung
- 54: elektrisch betätigter Riegelmechanismus
- 55: mechanisch betätigter Riegelmechanismus
- 56: Mittel zur Erkennung eines Werkzeugtyps
- 57: Verriegelungselement
- 58: Sensormittel
- 59: Riegelaufnahme
- 60: Vorsprung
- 61: Riegel
- 62: Teigabweiser
- 63: Antriebsmechanismus
- 64: Dichtungsmembran
- 65: Öffnung
- 66: geschlossene Linie um die Öffnung 65
- 67: Momentandrehachse
- 68: Balg
- 69: Kegelabschnitt
- 70: Biegefalten
- 71: Gleitlager
- 72: Kunststoffbuchse
- 73: Welle für das Werkzeug 17, 18
- 74: Lochscheibe

- D: Durchmesser
- T: Dicke

## Patentansprüche

1. Elektromotorisches Küchengerät (1), vorzugsweise elektromotorische Solo-oder Universalküchenmaschine, umfassend
mindestens ein Werkzeug (17, 18) zum Bearbeiten von Nahrungsmitteln wie z.B. eine Teigmasse,
mindestens eine Werkzeugkupplung (15, 16) zum Verbinden des Werkzeuges (17, 18) mit dem Küchengerät (1),
einen Antriebsmechanismus (63) zum Antreiben des Werkzeugs (17, 18), und einen Teigabweiser (62) an der Werkzeugkupplung (15, 16) zum Schützen des Antriebsmechanismus (63) vor Kontakt mit Verunreinigungen, insbesondere vor den Nahrungsmitteln,
**wobei** der Teigabweiser (62) als, insbesondere rotationssymmetrische, Dichtungsmembran (64) ausgebildet ist und wobei die Dichtungsmembran (64) eine Öffnung (65) zum Durchstecken einer Welle (73) für das Werkzeugs (17, 18) aufweist und entlang einer um die Öffnung (65) verlaufenden geschlossenen Linie (66) an der Werkzeugkupplung (15, 16) befestigt ist,
**dadurch gekennzeichnet, dass** in der Öffnung (65) ein Gleitlager (71) oder eine Kunststoffbuchse (72) zur dichten Aufnahme der Welle (73) vorgesehen ist.

2. Küchengerät (1) nach einem der vorherigen Ansprüche, **dadurch gekennzeichnet, dass** das Werkzeug (17, 18) um eine Momentandrehachse (67) drehbar ist, wobei die Momentandrehachse (67) relativ zum Küchengerät (1) veränderlich ist.

3. Küchengerät (1) nach Anspruch **2**, **dadurch gekennzeichnet, dass** die Momentandrehachse (67) auf einer Kegelfläche oder Zylinderfläche wandern kann.

4. Küchengerät (1) nach einem der vorherigen Ansprüche, **dadurch gekennzeichnet, dass** die Dichtungsmembran (64) aus einem Elastomer hergestellt ist.

5. Küchengerät (1) nach einem der vorherigen Ansprüche, **dadurch gekennzeichnet, dass** die Dichtungsmembran (64) durch einen Balg (68), insbesondere einen Faltenbalg, gebildet ist.

6. Küchengerät (1) nach einem der vorherigen Ansprüche, **dadurch gekennzeichnet, dass** die Dichtungsmembran (64) einen Kegelabschnitt (69) aufweist.

7. Küchengerät (1) nach einem der vorherigen Ansprüche, **dadurch gekennzeichnet, dass** die Dichtungsmembran (64) mindestens eine, insbesondere mindestens zwei, beispielsweise mindestens drei, Biegefalten (70) aufweist.

8. Küchengerät (1) nach einem der vorherigen Ansprüche, **dadurch gekennzeichnet, dass** die Dichtungsmembran (64) eine Dicke (T) aufweist, die weniger als ein Fünftel, insbesondere weniger als ein Zehntel, ihres Durchmessers (D) beträgt.

9. Küchengerät (1) nach einem der vorherigen Ansprüche, **dadurch gekennzeichnet, dass** das Werkzeug (17, 18) ein Pürier-, Misch-, Häcksel-, Knet-und/oder Schneidwerk und/oder ein Schlag- bzw. Rührbesen ist.

10. Küchengerät (1) nach einem der vorherigen Ansprüche, **dadurch gekennzeichnet, dass** der Teigabweiser (62) eine metallische, insbesondere mit der Dichtungsmembran im Wesentlichen konzentrische, Lochscheibe (74) aufweist.

## Claims

1. Electric-motor-driven kitchen appliance (1), preferably electric-motor-driven solo or universal food processor, comprising at least one tool (17, 18) for processing foodstuffs such as, for example, a pasty material, at least one tool coupling (15, 16) for connecting the tool (17, 18) with the kitchen appliance (1), a drive mechanism (63) for driving the tool (17, 18) and a pasty material deflector (62) at the tool coupling (15, 16) for protecting the drive mechanism (63) from contact with contaminants, particularly from the foodstuffs, wherein the pasty material deflector (62) is constructed as a sealing membrane (64) which is, in particular, rotationally symmetrical, and wherein the sealing membrane (64) has an opening (65) for insertion of a shaft (73) for the tool (17, 18) and is fastened to the tool coupling (15, 16) along a closed line (66) extending around the opening (65), **characterised in that** a slide bearing (71) or a plastics material bush (72) for sealed reception of the shaft (73) is provided in the opening (65).

2. Kitchen appliance (1) according to the preceding claim, **characterised in that** the tool (17, 18) is rotatable about an instantaneous rotational axis (67), wherein the instantaneous rotational axis (67) is variable relative to the kitchen appliance (1).

3. Kitchen appliance (1) according to claim 2, **characterised in that** the instantaneous rotational axis (67) can migrate on a cone surface or cylinder surface.

4. Kitchen appliance (1) according to any one of the preceding claims, **characterised in that** the sealing membrane (64) is made of an elastomer.

5. Kitchen appliance (1) according to any one of the preceding claims, **characterised in that** the sealing membrane (64) is formed by bellows (68), particularly a fold bellows.

6. Kitchen appliance (1) according to any one of the preceding claims, **characterised in that** the sealing membrane (64) has a conical section (69).

7. Kitchen appliance (1) according to any one of the preceding claims, **characterised in that** the sealing membrane (64) has at least one, particularly at least two, for example at least three, bending folds (70).

8. Kitchen appliance (1) according to any one of the preceding claims, **characterised in that** the sealing membrane (64) has a thickness (T) which is less than a fifth, particularly less than a tenth, of its diameter (D).

9. Kitchen appliance (1) according to any one of the preceding claims, **characterised in that** the tool (17, 18) is a puréeing, mixing, chopping, kneading and/or cutting mechanism and/or a beating or stirring whisk.

10. Kitchen appliance (1) according to any one of the preceding claims, **characterised in that** the pasty material deflector (62) is a metallic apertured disc (74) which is, in particular, substantially concentric with the sealing membrane.

## Revendications

1. Appareil de cuisine (1) à moteur électrique, de préférence robot ménager à moteur électrique, individuel ou universel, comprenant
au moins un outil (17, 18) destiné à traiter des aliments, comme par ex. une masse de pâte,
au moins un accouplement d'outil (15, 16) destiné à raccorder l'outil (17, 18) à l'appareil de cuisine (1),
un mécanisme d'entraînement (63) destiné à entraîner l'outil (17, 18), et un déflecteur de pâte (62) placé sur l'accouplement d'outil (15, 16) pour protéger le mécanisme d'entraînement (63) contre le contact avec des souillures, notamment les aliments,
le réflecteur de pâte (62) étant réalisé en tant que membrane d'étanchéité (64), notamment à symétrie de rotation, et la membrane d'étanchéité (64) présentant un orifice (65) pour enficher un arbre (73) pour l'outil (17, 18) et étant fixée sur l'accouplement d'outil (15, 16) le long d'une ligne (66) fermée s'étendant autour de l'orifice (65), **caractérisé en ce qu'**un palier à glissement (71) ou une douille en matière plastique (72) est ménagé(e) dans l'orifice (65) pour le logement étanche de l'arbre (73).

2. Appareil de cuisine (1) selon la revendication 1, **caractérisé en ce que** l'outil (17, 18) est rotatif autour d'un axe de rotation instantané (67), l'axe de rotation instantané (67) étant variable de manière relative par rapport à l'appareil de cuisine (1).

3. Appareil de cuisine (1) selon la revendication 2, **caractérisé en ce que** l'axe de rotation instantané (67) peut migrer sur une surface conique ou une surface cylindrique.

4. Appareil de cuisine (1) selon l'une quelconque des revendications précédentes, **caractérisé en ce que** la membrane d'étanchéité (64) est fabriquée à partir d'un élastomère.

5. Appareil de cuisine (1) selon l'une quelconque des revendications précédentes, **caractérisé en ce que** la membrane d'étanchéité (64) est formée par un soufflet (68), notamment un soufflet à plis.

6. Appareil de cuisine (1) selon l'une quelconque des revendications précédentes, **caractérisé en ce que** la membrane d'étanchéité (64) présente une section conique (69).

7. Appareil de cuisine (1) selon l'une quelconque des revendications précédentes, **caractérisé en ce que** la membrane d'étanchéité (64) présente au moins un, notamment au moins deux, par exemple au moins trois plis de flexion (70).

8. Appareil de cuisine (1) selon l'une quelconque des revendications précédentes, **caractérisé en ce que** la membrane d'étanchéité (64) présente une épaisseur (T) qui est inférieure à un cinquième de son diamètre (D), notamment inférieure à un dixième de son diamètre.

9. Appareil de cuisine (1) selon l'une quelconque des revendications précédentes, **caractérisé en ce que** l'outil (17, 18) est un outil pour réduire en purée, mélanger, hacher, pétrir et/ou couper, un fouet batteur resp. un fouet mélangeur.

10. Appareil de cuisine (1) selon l'une quelconque des revendications précédentes, **caractérisé en ce que** le déflecteur de pâte (62) présente un disque perforé (74) métallique, notamment essentiellement concentrique à la membrane d'étanchéité.
